(19) Europäisches Patentamt
European Patent Office
Office européen des brevets

(11) Veröffentlichungsnummer: **0 083 011**
**B1**

(12) **EUROPÄISCHE PATENTSCHRIFT**

(45) Veröffentlichungstag der Patentschrift: **29.07.87**

(51) Int. Cl.[4]: **G 11 B 5/70,** G 11 B 5/84

(21) Anmeldenummer: **82111523.5**

(22) Anmeldetag: **11.12.82**

# (54) Verfahren zur Herstellung magnetischer Aufzeichnungsträger.

(30) Priorität: **28.12.81 DE 3151590**

(43) Veröffentlichungstag der Anmeldung:
**06.07.83 Patentblatt 83/27**

(45) Bekanntmachung des Hinweises auf die Patenterteilung:
**29.07.87 Patentblatt 87/31**

(84) Benannte Vertragsstaaten:
**DE FR GB NL**

(56) Entgegenhaltungen:
**DE-A-2 945 633**
**DE-B-1 295 011**
**US-A-3 911 196**

(73) Patentinhaber: **BASF Aktiengesellschaft**
**Carl-Bosch-Strasse 38**
**D-6700 Ludwigshafen (DE)**

(72) Erfinder: **Melzer, Milena**
**Kirchenstrasse 116**
**D-6700 Ludwigshafen (DE)**
Erfinder: **Schneider, Norbert**
**Madenburgstrasse 57**
**D-6701 Altrip (DE)**
Erfinder: **Kopke, Helmut**
**Goethestrasse 11**
**D-6714 Weisenheim (DE)**
Erfinder: **Schoettle, Klaus**
**Ladenburger Strasse 70**
**D-6900 Heidelberg (DE)**
Erfinder: **Koester, Eberhard, Dr.**
**Max-Slevogt-Strasse 23**
**D-6710 Frankenthal (DE)**
Erfinder: **Balz, Werner, Dr.**
**Kropsburgstrasse 44**
**D-6703 Limburgerhof (DE)**
Erfinder: **Grau, Werner, Dr.**
**Tuchbleiche 5**
**D-6712 Bobenheim-Roxheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 083 011 B1

**Beschreibung**

Die Erfindung betrifft ein verfahren zur Herstellung magnetischer Aufzeichnungsträger durch Herstellen einer Dispersion von feinteiligen anisotropen magnetischen Teilchen in einer Lösung einer schichtbildenden Bindemittelmischung aus einem Polyurethanlack, der aus einem linearen oder verzweigten hydroxylgruppenhaltigen Polyester und einem Di- oder Polyisocyanat erhalten wird, und einem Phenoxiharz in einem organischen Lösungsmittel unter Zugabe üblicher Hilfsmittel, Auftragen einer Schicht der flüssigen Dispersion auf ein unmagnetisches Trägermaterial, Orientieren der magnetischen Teilchen mittels eines Magnetfeldes, Vernetzen der Bindemittelkomponenten und Trocknen der aufgetragenen Schicht, Magnetische Aufzeichnungsträger mit Magnetschichten auf der Basis von ferromagnetischem Chromdioxid, kobalthaltigen Eisenoxiden oder ferromagnetischen, im wesentlichen aus Eisen bestehenden Metallteilchen finden im Vergleich zu solchen mit Magnetschichten auf der Basis von üblichen magnetischen Eisenoxiden, wegen der außerordentlich verbesserten Aufzeichnungseigenschaften, insbesondere auf dem Audio- und Videogebiet, steigende Verbreitung. Hinsichtlich der Qualität der Aufzeichnungsträger ist aber neben den magnetischen und verarbeitungstechnischen Eigenschaften des magnetischen Materials die Auswahl des schichtbildenden polymeren Bindemittels von gleichrangiger Bedeutung.

Es ist bekannt magnetische Aufzeichnungsträger, die hohen mechanischen Beanspruchungen ausgesetzt sind, mit Dispersionen der magnetischen Materialien in Bindemitteln auf Basis von Polyurethanelastomeren oder von Abmischungen von Polyurethanelastomeren mit anderen Polymerbindemitteln als Magnetschicht herzustellen. Polyesterurethanelastomere, wie sie beispielsweise in der Deutschen Auslegeschrift 11 06 959 beschrieben sind oder Polyetherurethanelastomere, wie sie in der US-Patentschrift 28 99 411 beschrieben sind, weisen bei Verwendung als alleinige Bindemittel für die Magnetschicht jedoch eine zu geringe Oberflächenhärte auf. Polyurethanelastomere der erwähnten Typen besitzen bei Verwendung als alleinige Bindemittel zudem den Nachteil, daß in ihren Lösungen dispergierte Magnetpartikel beim Durchlaufen eines Magnetfeldes nach der Beschichtung eine unbefriedigende Ausrichtung erfahren. Des weiteren sind derartige Produkte, die nach dem Schmelz-kondensationsverfahren hergestellt sind, häufig nicht völlig frei von höhermolekularen, schlecht löslichen Bestandteilen, die in Magnetschichten Anlaß zu Schichtinhomogenitäten und Oberflächenstörungen sein können.

In der Patentliteratur existiert eine Anzahl von Vorschlägen, die Nachteile der niederen Schichthärte, die bei Verwendung von Polyurethanen als alleinige Bindemittel für die Magnetschicht auftreten, durch Zumischen eines weiteren Bindemittels zu beheben. Die Verbesserung der Schichthärte durch Zumischung eines Polyesters, wie es in der Deutschen Auslegeschrift 12 69 661 beschrieben ist, birgt jedoch die Gefahr des Verklebens einzelner Schichtlagen bei höheren Temperaturen und höherem Wickeldruck in sich. Die Abmischung von Polyurethanelastomeren mit höhermolekularen Phenoxyharzen, wie es die Deutsche Auslegeschrift 12 95 011 beschreibt, zeigt bis zu Temperaturen von etwa 65°C ausreichend befriedigende mechanische Eigenschaften, die Mitverwendung des Phenoxyharzes bewirkt jedoch eine Verschlechterung der Ausrichtbarkeit der magnetischen Teilchen längs ihrer magnetischen Vorzugsrichtung im Magnetfeld. Es ist auch bekannt, Gemische von Vinylchloridcopolymerisaten mit Polyurethanelastomeren als Bindemittel für Magnetschichten zu verwenden. So wird in der Us-Patentschrift 3 144 352 beschrieben, Polyurethanelastomeren Vinylchlorid/Acrylnitrilcopolymerisate zuzusetzen, jedoch ist die relativ geringe thermische Stabilität der resultierenden Produkte nachteilig (vgl. hierzu Deutsche Offenlegungsschrift 20 37 605). Eine Kombination von Polyurethanelastomeren mit Vinylchlorid-Vinylacetat-Copolymerisaten als Bindemittel für Magnetschichten wird in der Deutschen Auslegeschrift 12 82 700 sowie eine solche von Polyurethanelastomeren mit einem Phenoxiharz und einem Vinylchlorid-Vinylidenchloridharz wird in der DE—A—29 45 633 empfohlen, jedoch gewährleisten die Verwendung dieser Kombination nicht die von der Praxis für die Magnetschicht geforderten Eigenschaften bei erhöhten Temperaturen. Die Abmischung von Polyesterurethanen mit Polycarbonaten, wie sie in der Deutschen Offenlegungsschrift 21 14 611 vorgeschlagen wird, befriedigt nicht woll hinsichtlich der Viskosität der Lösung dieses Bindemittelgemisches.

Es wurde auch schon vorgeschlagen (US—A—3 149 995), das Polyurethanbindemittel direkt im fertigen Beschichtungsgemisch, welches Magnetpigment, Präpolymeres und Lösungsmittel enthält, durch Zufügen eines Härters zu erzeugen. Bei diesem Vorgang bildet sich durch die Reaktion der Isocyanatgruppen des Präpolymeren mit den aktiven Wasserstoffatomen des Härters die endgültige Bindemittelmatrix. Nachteilig ist hierbei, daß infolge der raschen Anfangsreaktion Viskositätsschwankungen auftreten können, welche auch zu Inhomogenitäten in der Magnetschicht führen können.

In ähnlicher Weise wird gemäß der Deutschen Auslegeschrift 11 30 612 vorgegangen, bei der das magnetische Eisenoxid in einer Mischung aus hydroxylgruppenhaltigem Polyester, physikalisch trocknendem Bindemittel, z.B. einem Polyvinylderivat oder Nitrocellulose, dispergiert und kurz vor dem Auftragen der Dispersion auf das Trägermaterial ein Polyisocyanat zur Polyurethanlackbindung zugegeben wird. Die Übertragung dieser Verfahrensweise auf die Verarbeitung der neuen magnetischen Materialien führt nicht zu magnetischen Aufzeichnungsträgern mit den nunmehr erforderlichen Eigenschaften.

Es bestand daher die Aufgabe, für ein Verfahren zur Herstellung von magnetischen Aufzeichnungsträgern unter Verwendung von feinteiligem anisotropen magnetischem Material, eine Bindemittelmischung bereitzustellen, mit welcher sich bei entsprechender Verfahrensweise magnetische Aufzeichnungsträger erhalten lassen, die sowohl verbesserte magnetische als auch mechanische Eigenschaften aufweisen. Insbesondere war es Aufgabe der Erfindung, das Verfahren zur Herstellung von magnetischen Aufzeichnungsträgern so zu verbessern, daß die, das eingesetzte magnetische Material kennzeichnende magnetischen Eigenschaften, wie erhöhte Koerzitivfeldstärke, hohe remanente Magnetisierung und gute Ausrichtbarkeit der Teilchen in der Magnetschicht, bei den resultierenden Aufzeichnungsträgern in Form verbesserter Aufzeichnungseigenschaften voll zur Wirkung gelangen und gleichzeitig die mechanische Widerstandsfähigkeit der Magnetschicht die gesteigerten Anforderung bei der Audio-und in besonderer Weise bei der Videoaufzeichnung weitgehend erfüllen.

Es wurde nun gefunden, daß sich magnetische Aufzeichnungsträger durch Herstellen einer Dispersion von feinteiligen anisotropen magnetischen Teilchen in einer Lösung einer schichtbildenden Bindemittelmischung aus einem Polyurethanlack, der aus einem linearen oder verzweigten hydroxylgruppenhaltigen Polyester und einem Di- oder Polyisocyanat erhalten wird, und einem Phenoxiharz in einem organischen Lösungsmittel unter Zugabe üblicher Hilfsmittel, Auftragen einer Schicht der flüssigen Dispersion auf ein unmagnetisches Trägermaterial, Orientieren der magnetischen Teilchen mittels eines Magnetfeldes, Vernetzen der Bindemittelkomponenten und Trocknen der Aufgetragenen Schicht, mit den aufgabengemäß geforderten Eigenschaften herstellen lassen, wenn die magnetischen Teilchen in einer in organischen Lösungsmitteln gelösten Mischung aus

(A) 60 bis 90 Gewichtsprozent eines linearen oder verzweigten hydroxylgruppenhaltigen Polyesters mit einem Hydroxylgruppengehalt von 0,5 bis 8%, und

(B) 10 bis 40 Gewichtsprozent eines thermoplastischen hydroxylgruppenhaltigen Phenoxiharzes mit einem Molekulargewicht zwischen 10 000 und 50 000

dispergiert werden und anschließend eine Lösung eines Di- oder Polyisocyanats in einer Menge von 0,6 bis 1,3 Äquivalente, bezogen auf ein Äquivalent Hydroxylgruppen des Polyesters, zugesetzt wird.

Es wurde ferner gefunden, daß sehr vorteilhafte Produkte auch erhalten werden, wenn der Bindemittelmischung noch zusätzlich 0,5 bis 10 und insbesondere 2 bis 5 Gewichtsprozent, bezogen auf die Summe der Mengen A und B eines Vinylpolymers, oder eines Cellulosederivats oder auch einer niedermolekularen hydroxylgruppenhaltigen Verbindung, wie z.B. Diethylenglykol, Butandiol-1,4- oder Propandiol-1,2 zugesetzt werden.

Als hydroxylgruppenhaltige Polyester des Polyurethans (A) eignen sich 0,5 bis 8 und insbesondere 1 bis 6 Gew.-% freie Hydroxylgruppen aufweisende gesättigte Polyester aus Polyolen und Dicarbonsäuren. Bevorzugt sind Polyester wie sie durch Umsetzung der Dicarbonsäuren oder deren Anhydriden mit molar überschüssigen Mengen an Polyolen hergestellt werden. Als Dicarbonsäuren kommen Adipinsäure oder o-Phthalsäure, als Polyole Trimethylolpropan, Butandiol-1,4- Propandiol-1,2 und Diethylenglykol in Betracht. Besonders bevorzugt sind Polyester, welche aus 1,5-Mol-Teile Adipinsäure, 1,5- Molteile o-Phthalsäure und 4 Mol-Teile Trimethylolpropan hergestellt werden und einen geringen Verzweigungsgrad, einen Hydroxylgruppengehalt von 5% und eine Viskosität von etwa 18 000 mPa.s aufweisen oder lineare Polyester, hergestellt aus 10 Mol-Teilen Adipinsäure und 11 Mol-Teilen Diethylenglykol, mit einem Hydroxylgruppengehalt von 1% und einer Viskosität von 15 000 mPa.s oder Kombinationen von beiden.

Als thermoplastische, hochmolekulare Phenoxiharze (B) kommen solche in Frage, die ein Molekulargewicht von 10 000 bis 50 000, vorzugsweise zwischen 20 000 und 30 000 und kleine Mengen an Epoxidgruppen sowie vorzugsweise 4 bis 8 oder insbesondere 5 bis 7 Gewichtsprozent, bezogen auf das Harz, an Hydroxylgruppen aufweisen.

Als geeignete Epoxidharze seien insbesondere die aus Bisphenol-A und Epichlorhydrin hergestellten hydroxylgruppenhaltigen Produkte gennant, wie z.B. Epoxidharze, hergestellt aus Bisphenol-A und Epichlorhydrin, die einen OH-Gehalt von 6,1 Gew.-% und ein Molekulargewicht von 30 000 aufweisen. Als Vertreter für die bevorzugten Phenoxidharze seien beispielhaft die linearen polymeren Diglycidether des Bisphenol-A mit wiederkehrenden Struktureinheiten der Formel

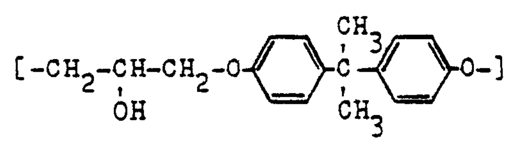

erwähnt.

Zur Härtung und Vernetzung der beschriebenen Polyesterkomponenten des Polyurethans (A) und teilweise auch der Komponente (B) werden die aus der Polyurethanchemie bekannten und üblichen Di- und Polyisocyanate, vorzugsweise solche mit zwei oder mehr aromatisch gebundenen Isocyanatgruppen eingesetzt. Beispiele hierfür sind 1,6-Hexamethylendiisocyanat, Dicyclohexylmethan-4,4'-diisocyanat, Isophorondiisocyanat, 2,4- und 2,6-Toluylendiisocyanat, m-Phenylendiisocyanat, Xylylendiisocyanat, Diphenylmethan-4,4'-diisocyanat, Naphthylen-1,5-diisocyanat, 3,3'-Dimethyldiphenyl-4,4'-diisocyanat, Triphenylmethan-4,4',4''-triisocyanat-1,4-Cyclohexylendiisocyanat, insbesondere Umsetzungsprodukte aus 3 Mol Toluylendiisocyanat und 1 Mol Triol oder aus 3 Mol Toluylendiisocyanat und 2 Mol Hexamethylendiisocyanat. Die Isocyanate werden zur Vernetzung der hydroxylgruppenhaltigen Komponenten des Bindemittelsystems in solchen Mengen eingesetzt, daß das Verhältnis der Äquivalente der Isocyanatgruppen zu den freien Hydroxylgruppen der Polyesterkomponente von 1:0,6 bis 1:1,3, insbesondere von 1:0,9 bis 1:1,1 beträgt.

Als besonders vorteilhaft für das erfindungsgemäße Verfahren hat sich eine Bindemittelmischung erwiesen, die aus 65 bis 85 Gew.% des Polyurethans (A) und 35 bis 15 Gew.% des Phenoxiharzes (B) besteht.

Zur Durchführung des erfindungsgemäßen Verfahrens werden das anisotrope magnetische Material, insbesondere das ferromagnetische Chromoxid oder die ferromagnetischen, im wesentlichen aus Eisen bestehenden Metallteilchen oder auch undotierte oder dotierte Eisenoxide zusammen mit den an sich üblichen Zusatzstoffen, wie Dispergierhilfsmittel, beispielsweise Lecithine, geringe Monocarbonsäureanteile oder Gemische derselben, Zinkoleat, -stearat, -isostearat, sowie Füllstoffe, wie Ruß, Graphit, Quarzmehl und/oder nicht magnetisierbares Pulver auf Silicatbasis, Gleitmittel wie Isostearinsäure oder Butylstearat und Mittel zur Verbesserung des Verlaufs, wie geringe Mengen Siliconöl, organischen Lösungsmitteln, wie Tetrahydrofuran, Dimethylformamid, Dioxan oder Ketone, Ester oder aromatische Kohlenwasserstoffe, wie Methylethylketon, Ethylglykolacetat oder Benzol oder Toluol, sowie gegebenenfalls Mischungen dieser Loäsungsmittel, die Polyesterkomponente des Polyurethans (A) und die in organischen Loäsungsmitteln gelöste Bindemittelkomponente (B) in einer Dispergiermaschine, z.B. einer Topfkugelmühle oder einer Rührwerkskugelmühle, zu einer Dispersion verarbeitet. In diese Dispersion wird anschließend eine Lösung der Isocyanatkomponente des Polyurethans (A) eingerührt und die Magnetdispersion mit Hilfe üblicher Beschichtungsmaschinen, z.B. mittels eines Linealgießers, auf den nichtmagnetisierbaren Träger aufgetragen. Als nichtmagnetische Träger lassen sich die üblichen Trägermaterialien verwenden, insbesondere Folien aus linearen Polyestern, wie Polyethylenterephthalat, im allgemeinen in Stärken von 4 bis 200 µm und insbesondere von 6 bis 36 µm. Bevor die Bindemittelkomponenten vernetzt sind und die noch flüssige Beschichtungsmischung auf dem Träger getrocknet wird, was zweckmäßigerweise bei Temperaturen von 50 bis 90°C während 2 bis 5 Minuten geschieht, werden die anisotropen Magnetteilchen durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Anwendung von Druck und Temperaturen zwischen Raumtemperatur und 100°C, vorzugsweise 40 bis 80°C, geglättet und verdichtet werden. Die Dicke der Magnetschicht beträgt in allgemeinen 1 bis 15 µm.

Die nach dem erfindungsgemäßen Verfahren hergestellten magnetischen Aufzeichnungsträger zeichnen sich gegenüber solchen nach dem Stand der Technik gefertigten durch verbesserte magnetische und auch mechanische Eigenschaften aus. Hervorzuheben ist der unter Ausnutzung der guten Orientierbarkeit der speziellen magnetischen Materialien erzielbare hohe Richtfaktor, das ist das Verhältnis der remanenten Magnetisierung längs zur vorgenommenen Ausrichtung zu der remanenten Magnetisierung quer dazu. Dadurch und durch gleichzeitig bewirkte Erhöhung der remanenten Magnetisierung längs zur Aufzeichnungsrichtung werden die Aufzeichnungseigenschaften insbesondere auf dem Audio- und auf dem Videosektor, aber auch bei der Datenaufzeichnung beachtlich verbessert. Bei den mechanischen Eigenschaften tritt die vorteilhafte Wirkung des erfindungsgemäßen Verfahrens durch eine hohe Abriebsfestigkeit der Magnetschicht bei gleichzeitig günstigem Reibungsverhalten und einer für die Aufzeichnungseigenschaften sich günstig auswirkenden glatten Oberfläche hervor. Diese bereits ohne besondere an sich üblichen Oberflächenvergütungsmaßnahmen erhaltene Oberfläche der magnetischen Aufzeichnungsträger ist sehr glatt, so daß bereits ohne Oberflächenvergütungsmaßnahmen eine Aufzeichnung und Wiedergabe möglich ist. Für anspruchsvolle Arten der Aufzeichnung und Wiedergabe ist eine Verdichtung und Oberflächenglättung erforderlich, jedoch mit einem wesentlich geringeren Aufwand als bei Schichten nach dem Stand der Technik. Darüber hinaus stellt auch die Verringerung des erforderlichen Dispergieraufwandes und der geringeren Lösungsmittelanteil in den Dispersionen die Vorteile des erfindungsgemäßen Verfahrens dar.

Die in den nachstehenden Beispielen und Vergleichsversuchen genannten Teile und Prozente beziehen sich, soweit nicht anders angegeben, auf das Gewicht.

## Beispiel 1

In einer Stahlkugelmühle von 6 1 Rauminhalt, gefüllt mit 8 kg Stahlkugeln mit einem Durchmesser von 4 bis 6 mm, wurden 900 g eines Chromdioxids mit einer Koerzitivfeldstärke von 48 kA/m und 820 g eines Lösungsmittelgemisches aus gleichen Teilen Dioxan und Tetrahydrofuran eingefüllt. Weiterhin wurden 18 g Zinkoleat sowie 47 g eines handelsüblichen Polyesters aus 1,5-Mol-Teilen Adipinsäure, 1,5-Mol-Teilen Phthalsäure und 4 Mol-Teilen Trimethylopropan mit einem geringen Verzweigungsgrad und einem Hydroxylgruppengehalt von 5%, 101 g eines 20 %igen Lösung eines Phenoxiharzes aus Bisphenol A und Epichlorhydrin mit einem mittleren Mohlgewicht von 30 000 und einem Hydroxylgruppengehalt von 6% im oben genannten Lösungsmittelgemisch, angesetzt. Dieses Gemisch wurde 46 Stunden dispergiert. Danach wurden 47 g eines handelsüblichen linearen Polyesters aus 10 Mol-Teilen Adipinsäure und 11 mol-Teilen Diethylenglykol, mit einem Hydroxylgruppengehalt von 1%, sowie 101 g der obengenannten 20 %igen Lösung des Phenoxiharzes, weitere 400 g des obengenannten Lösungsmittelgemisches, 18 g n-Butylstearat und 4 g Stearinsäure zugesetzt und das Gesamtgemisch weitere 4 Stunden dispergiert. Die erhaltene Dispersion wurde unter Druck durch einen Filter mit 5 µm Poren filtriert und unmittelbar or dem nachfolgenden Auftragen auf eine 19 µm dicke Polyethylenterephthalatfolie mittels eines üblichen Linealgießers unter kräftigem Rühren mit 56,4 g einer 75 %igen Lösung eines Triisocyanats aus 3 Mol Toluylendiisocyanat und 1 Mol Trimethylolpropan in Ethylenacetat versehen. Die Beschichtete Folie wurde nach

DurchlauFen eines Magnetfeldes zur Ausrichtung der Chromdioxid-Teilchen bei Temperaturen zwischen 50 und 90°C getrocknet. Nach der Trocknung wurde die Magnetischicht der beschichteten Folie durch Hindurchführen zwischen beheitzten Walzen (80°C unter einem Liniendruck von 200 kp/cm) verdichtet und geglättet und dann in 3,81 mm breite (für Audioanwendung) und 12,7 mm breite (für Videoanwendung) Bänder geschnitten. Die Vernetzungsreaktion unter Polyurethanbildung verlief während der und kurz nach der Bandherstellung.

Die Messung der magnetischen Eigenschaften wurde in einem Meßfeld von 160 kA/m durchgeführt. Die Oberflächenrauhigkeit wurde als gemittelte Rauhtiefe $R_z$ gemäß DIN 4768 Blatt 1 bestimmt. Bei den Aufzeichnungseigenschaften wurden die elektroakustischen Werte gemäß DIN 45 401, 45 403 und 45 512 (Blatt 12) gegen das Bezugsband C 401 R und die Videoeigenschaften gegen das VHS-Bezugsband der Firma Victor Company of Japan ermittelt. Die Meßergebnisse sind in Tabelle 1 angegeben.

Vergleichsversuch 1

In einer Stahlkugelmühle von 6 l Rauminhalt, gefüllt mit 8 kg Stahlkugeln mit einem Durchmesser von 4 bis 6 mm, wurden 900 g des gleichen Chromdioxids mit einer Koerzitivfeldstärke von 48 kA/m wie in Beispiel 1 und 630 g eines Lösungsmittelgemisches aus gleichen Teilen Dioxan und Tetrahydrofuran eingefüllt. Weiterhin wurden 18 g Zinkoleat sowie 647 g einer 12,5 %igen Lösung eines Polyesterpolyurethans vom K-Wert 60, hergestellt aus einem Polyester aus Butandiol und Adipinsäure (0,42 Mol), Butandiol (0,55 Mol), Trimethylolpropan (0,03 Mol) und Diphenylmethandiisocyanat (1,05 Mol) in obengenanntem Lösungsmittelgemisch und 101 g einer 20 %igen Lösung eines Phenoxiharzes aus Bisphenol A und Epichlorhydrin mit einem mittleren Molgewicht von 30 000 und einem Hydroxylgruppengehalt von 6%, gleichfalls in dem genannten Lösungsmittelgemisch zugesetzt. Dieses Gemisch wurde 92 Stunden dispergiert. Danach wurden 647 g der gleichen Polyesterpolyurethanlösung, 101 g der gleichen Phenoxiharzlösung, 18 g n-Butylstearat, 4 g Stearinsäure sowie 235 g des oben genannten Lösungsmittelgemisches zugesetzt und weitere 24 Stunden dispergiert. Die erhaltene Dispersion wurde unter Druck durch einen Filter mit 5 µm dicken Poren filtriert und auf eine 19 µm dicke Polyethylenterephthalatfolie gleich wie im Beispiel 1 aufgetragen, zu Bändern weiterverarbeitet und die Bänder geprüft. Die Meßergebnisse sind in Tabelle 1 aufgeführt.

TABELLE 1

| | Beispiel 1 | Vergleichsversuch 1 |
|---|---|---|
| Nach der Beschichtung ohne Oberflächenbehandlung: | | |
| Rauhigkeit $R_z$ [µm] | 0,25 | 0,52 |
| Glanzwert | 95 | 47 |
| Remanente Magnetisierung [mT] | 130 | 98 |
| Relative Remanenz | 0,86 | 0,79 |
| Richtfaktor | 3,0 | 1,7 |
| Nach der Verdichtung und Glättung durch Satinage: | | |
| Rauhigkeit $R_z$ [µm] | 0,15 | 0,21 |
| Glanzwert | 180 | 140 |
| Remanente Magnetisierung [mT] | 154 | 110 |
| Relative Remanenz | 0,87 | 0,78 |
| Richtfaktor | 3,0 | 1,7 |
| Elektroakustische Banddaten gemessen gegen: | | |
| Bezugsband C 401 R: | | |
| Tiefenempfindlichkeit $E_T$ 315 Kz [Δ dB] | −0,2 | −2,0 |

TABELLE 1

| | Beispiel 1 | Vergleichsversuch 1 |
|---|---|---|
| Nach der Beschichtung ohne Oberflächenbehandlung: | | |
| Höhenempfindlichkeit $E_H$ 10 kHz [Δ dB] | +4,8 | +2,9 |
| Tiefenaussteuerbarkeit $A_T$ 315 Hz [Δ dB] | −1,6 | −5,6 |
| Höhenaussteuerbarkeit $A_H$ 10 kHz [Δ dB] | +5,4 | +4,2 |
| Magnetschichtdicke [μm] | 3,6 | 3,2 |
| Videoeigenschaften: (Bezugsband VHS) | | |
| Hochfrequenzpegel 4,8 MHz [Δ dB] | +1,9 | −0,5 |
| Chromapegel 630 KHz | +3,1 | +0,6 |
| Luminanz S/N fg. [Δ dB] | +0,8 | −0,8 |
| Luminanz S/N bew. [Δ dB] | +1,2 | −1,4 |
| Chroma S/N [Δ dB] | +0,6 | −2,5 |

Beispiel 2

In der gleichen Stahlkugelmühle wie in Beispiel 1 wurden 1100 g eines Chromdioxids mit einer Koerzitivfeldstärke von 38 kA/m, 902 g eines Lösungsmittelgemisches aus gleichen Teilen Dioxan und Tetrahydrofuran und 27,5 g Zinkoleat eingefüllt. Weiterhin wurden 48.3 g eines handelsüblichen Polyesters aus 1,5 Mol-Teilen Adipinsäure, 1,5 Mol-Teilen Phthalsäure und 4 Mol-Teilen Trimethylolpropan, mit einem geringen Verzweigungsgrad und einem Hydroxylgruppengehalt von 5% und 110 g einer 20 %igen Lösung eines Phenoxiharzes aus Bisphenol A und Epichlorhydrin mit einem Mittleren Molgewicht won 30 000 und einem Hydroxylgruppengehalt von 6% im oben genannten Lösungsmittelgemisch zugesetzt. Dieses Gemisch wurde 70 Stunden dispergiert. Danach wurden 48,3 g eines handelsüblichen linearen Polyesters aus 10 Mol-Teilen Adipinsäure und 11 Mol-Teilen Diethylenglykol mit einem Hydroxylgruppengehalt von 1%, sowie 190 g der obengenannten 20 %igen Lösung des Phenoxiharzes, weitere 450 g des obengenannten Lösungsmittelgemisches und 2,25 g Siliconöl zugesetzt und das Gesamtgemisch weitere 16 Stunden dispergiert. Die erhaltene Dispersion wurde wie in Beispiel 1 filtriert und unmittelbar vor dem nachfolgenden Auftrag auf eine 12 μm dicke Polyethylenterephthalatfolie mittels eines üblichen Linealgießers unter kräftigem Rühren mit 57,97 g einer 75 %igen Lösung eines Triisocyanats aus 3 Mol Toluylendiisocyanat und 1 Mol Trimethylolpropan in Ethylacetat versehen. Die beschichtete Folie wurde nach Durchlaufen eines Magnetfeldes zur Ausrichtung der Chromdioxid-Teilchen zwischen 50 und 90°C getrocknet. Nach der Trocknung wurde ein Teil der mit Magnetschicht beschichteten Folie durch Hindurchführen zwischen auf 85°C beheizten Walzen unter einem Liniendruck von 200 kp geglättet und verdichtet, ein anderer Teil wurde durch Hindurchführen zwischen ungeheizten Walzen unter einem Liniendruck von 200 kp verdichtet und geglättet und ein dritter Teil wurde nicht verdichtet und geglättet. Alle drei Teile wurden auf die 3,81 mm breiten Bänder für Audioanwendung geschnitten. Die Vernetzungsreaktion unter Polyurethanbildung verlief während der und kurz nach der Bandherstellung.

Die Messung der magnetischen Eigenschaften, der Oberflächenrauhigkeit, des Glanzes und der elektroakustischen Werte wurden in gleicher Weise wie in Beispiel 1 durchgeführt. Die Meßergebnisse sind in Tabelle 2 zusammengestellt.

Vergleichsversuch 2

In einer Kugelmühle wie bereits beschrieben, wurden 900 g Chromdioxid mit einer Koerzitivfeldstärke von 38 kA/m und 630 g eines Lösungsmittelgemisches aus gleichen Teilen Dioxan und Tetrahydrofuran und 22,5 g Zinkoleat eingefüllt. Weiterhin wurden 513 g einer 13 %igen Lösung eines Polyesterpolyurethans von K-Wert 60, hergestellt aus einem Polyester aus Butandiol und Adipinsäure (0,42 Mol) Butandiol (0,55 Mol), Trimethylolpropan (0,03 Mol) und Diphenylmethandiisocyanat (1,05 Mol), in oben

genanntem Lösungsmittelgemisch und 333 g einer 10 %igen Lösung von mit Formaldehyd acetalisiertem Polyvinylalkohol gleichfalls in dem oben genannten Lösungsmittelgemisch zugesetzt. Dieses Gemisch wurde 120 Stunden dispergiert. Danach wurden weitere 326 g der Polyesterpolyurethanlösung, 212 g der Lösung von mit Formaldehyd acetalisierten Polyvinylalkohol, 2,25 g Siliconöl sowie weitere 385 g des oben genannten Lösungsmittelgemisches zugesetzt und das Gesamtgemisch nochmals 24 Stunden dispergiert. Die erhaltene Dispersion wurde wie in Beispiel 2 aufgetragen, zu Bändern verarbeitet und die Bänder wurden geprüft. Die Meßergebnisse sind in der Tabelle 2 angegeben.

TABELLE 2

| | Beispiel 2 | | | Vergleichsversuch 2 | | |
|---|---|---|---|---|---|---|
| | un-satiniert | satiniert RT | bei 85°C | un-satiniert | satiniert RT | bei 85°C |
| Rauhigkeit $R_Z$ [µm] | 0,37 | 0,19 | 0,16 | 1,02 | 0,47 | 0,31 |
| Glanzwert | 61 | 177 | 185 | 13 | 95 | 149 |
| Remanente Magnetisierung [mT] | 133 | 174 | 197 | 122 | 124 | 146 |
| Relative Remanenz | 0,85 | 0,86 | 0,86 | 0,79 | 0,79 | 0,79 |
| Richtfaktor | 3,0 | 3,0 | 3,0 | 1,9 | 1,9 | 1,9 |
| Elektroakustische Daten (Bezugsband C 401 R) | | | | | | |
| Tiefenempfindlichkeit $E_T$ 315 Hz [Δ dB] | −1,1 | +1,3 | +1,7 | −2,2 | −0,8 | 0 |
| Höhenempfindlichkeit $E_H$ 10 kHz [Δ dB] | −2,3 | +1,5 | −2,1 | −9,5 | −4,2 | −1,5 |
| Tiefenaussteuerbarkeit $A_T$ 315 [Δ dB] | −0,7 | +3,0 | +3,7 | −3,0 | −1,2 | 0 |
| Höhenaussteuerbarkeit $A_H$ 10 kHz (Δ dB] | −2,5 | +1,0 | +2,5 | −8,1 | −6,7 | −1,2 |
| Magnetschichtdicke [µm] | 7,1 | 4,9 | 5,0 | 6,1 | 5,7 | 5,1 |

RT=Raumtemperatur

Beispiel 3

In gleicher Weise wie bereits beschrieben, wurden in einer Kugelmühle 1000 g Co-dotiertes Eisenoxid mit einer Koerzitivfeldstärke von 30 kA/m, 920 g eines Lösungsmittelgemisches aus gleichen Teilen Dioxan und Tetrahydrofuran, 35 g eines Dispergiermittels auf der Basis einer Mischung eines Monophosphorsäureesters und dem Salz einer Sulfobernsteinsäure, 34,1 g eines handelsüblichen Polyesters aus 1,5-Mol-Teilen Adipinsäure, 1,5 Mol-Teilen Phthalsäure und 4 Mol-Teilen Trimethylolpropan, mit einem geringen Verzweigungsgrad und einem Hydroxylgruppengehalt von 5% sowie 100 g einer 20 %igen Lösung eines Phenoxiharzes aus Bisphenol A und Epichlorhydrin mit einem mittleren Mol-Gewicht von 30 000 und einem Hydroxylgruppengehalt von 6% in oben genanntem Lösungsmittelgemisch eingefüllt. Dieses Gemisch wurde 30 Stunden dispergiert. Danach wurde 49,1 g eines handelsüblichen linearen Polyesters aus 10 Mol-Teilen Adipinsäure und 11 Mol-Teilen Diethylenglykol, mit einem Hydroxylgruppengehalt von 1%, sowie 150 g des obengenannten 20 %igen Lösung des Phenoxyharzes, 1,0 g Siliconöl, 2,0 g Hydrochinon, 2,0 g n-Butylstearat, 10,0 g Isostearinsäure und 100 g des obengenannten Lösungsmittelgemisches zugesetzt und das ganze noch weitere 3 Stunden dispergiert.

Die erhaltene Dispersion wurde unter Druck durch einen Filter mit 5 µm Poren filtriert und unmittelbar vor dem nachfolgenden Auftrag auf eine 12 µm dicke Polyethylenterephthalatfolie mittels eines üblichen Linealgießers unter kräftigem Rühren mit 44,7 g einer 75 %igen Lösung eines Triisocyanats aus 3 Mol Toluylendiisocyanat und 1 Mol Trimethylolpropan in Ethylacetat versehen. Die beschichtete Folie wurde nach Durchlaufen eines Magnetfeldes zur Ausrichtung des Magnetpigmentteilchen bei Temperaturen zwischen 50 und 90°C getrocknet. Nach der Trocknung wurde die Magnetschicht durch Hindurchziehen zwischen auf 75°C beheizten Walzen unter einem Liniendruck von 200 kp verdichtet und geglättet und dann in 3,81 mm breite Bänder für Audioanwendung geschnitten. Die Vernetzungsreaktion unter Polyurethanbildung verlief während der und kurz nach der Bandherstellung.

Die Messung der magnetischen Eigenschaften wurde in einem Meßfeld von 100 kA/m durchgeführt. Die Messung der Oberflächenrauhigkeit und des Glanzwertes erfolgte wie im Beispiel 1 beschrieben. Die elektroakustischen Werte wurden gemäß DIN 45 401, DIN 45 403 und DIN 45 512, Bl. 12 gegen das Bezugsband IEC 1 bestimmt.

Nach der Beschichtung (ohne Oberflächenbehandlung):

| | |
|---|---|
| Rauhigkeit $R_z$ [µm] | 0,35 |
| Glanzwert | 56 |
| Remanente Magnetisierung [mT] | 136 |
| Relative Remanenz | 0,89 |
| Richtfaktor | 3,2 |

Nach der Verdichtung und Glättung durch Satinage:

| | |
|---|---|
| Rauhigkeit $R_z$ [µm] | 0,20 |
| Glanzwert | 149 |
| Remanente Magnetisierung [mT] | 189 |
| Relative Remanenz | 0,89 |
| Richtfaktor | 3,2 |

Elektroakustische Banddaten (Bezugsband IEC):

| | |
|---|---|
| Höhenempfindlichkeit $E_H$ 10 kHz [Δ dB] | +3,5 |
| Tiefenaussteuerbarkeit $A_T$ 315 Hz [Δ dB] | +2,8 |
| Höhenaussteuerbarkeit $A_H$ 10 kHz [Δ dB] | +2,4 |
| Magnetschichtdicke [µm] | 5,0 |

**Patentansprüche**

1. Verfahren zur Herstellung magnetischer Aufzeichnungsträger durch Herstellen einer Dispersion von feinteiligen anisotropen magnetischen Teilchen in einer Lösung einer schichtbildenden Bindemittelmischung aus einem Polyurethanlack, der aus einem linearen oder verzweigten hydroxylgruppenhaltigen Polyester und einem Di- oder Polyisocyanat erhalten wird, und einem Phenoxiharz in einem organischen Lösungsmittel unter Zugabe üblicher Hilfsmittel, Auftragen einer Schicht der flüssigen Dispersion auf ein unmagnetisches Trägermaterial, Orientieren der magnetischen Teilchen mittels eines Magnetfeldes, Vernetzen der Bindemittelkomponenten und Trocknen der aufgetragenen Schicht, dadurch gekennzeichnet, daß die magnetischen Teilchen in einer in organischen Lösungsmitteln gelösten Mischung aus
(A) 60 bis 90 Gewichtsprozent eines linearen oder verzweigten hydroxylgruppenhaltigen Polyesters mit einem Hydroxylgruppengehalt von 0,5 bis 8%, und
(B) 10 bis 40 Gewichtsprozent eines thermoplastischen hydroxylgruppenhaltigen Phenoxiharzes mit einem Molekulargewicht zwischen 10 000 und 50 000
dispergiert werden und anschließend eine Lösung eines Di- oder Polyisocyanats in einer Menge von 0,6 bis 1,3 Äquivalente, bezogen auf ein Äquivalent Hydroxylgruppen des Polyesters, zugesetzt wird.

2. Verfahren gemäß Anspruch 1, dadurch gekennzeichnet, daß die Komponente (B) ein Polykondensat aus 2,2-Bis-(4-hydroxyphenyl)-propan und Epichlorhydrin mit einem Hydroxylgruppengehalt von 5 bis 7 Gewichtsprozent und einem Molekulargewicht von 20 000 bis 30 000 ist.

3. Verfahren gemäß Anspruch 1, dadurch gekennzeichnet, daß die schichtbildende Bindemittelmischung neben den Komponenten (A) und (B) noch
(C) 0,5 bis 10 Gewichtsprozent, bezogen auf die Summen (A) und (B) eines Vinylpolymeren, eines Cellulosederivates oder einer niedermolekularen hydroxylgruppenhaltigen Verbindung aufweist.

**Revendications**

1. Procédé de fabrication d'un support d'enregistrement magnétique par préparation d'une dispersion de particules magnétiques, anisotropes, finement divisées, dans une solution d'un mélange de liant filmogène d'un vernis de polyuréthane qui est obtenu à partir d'un polyester à groupes hydroxyle, linéare ou ramifié, et d'un di-ou polyisocyanate, et d'une résine phénoxy, dans un solvant organique, avec addition d'auxiliaires usuels, application d'une couche de la dispersion liquide sur un matériau-support non magnétique, orientation des particules magnétiques au moyen d'un champ magnétique, réticulation des composants du liant et séchage de la couche appliquée, caractérisé par le fait que les particules magnétiques sont dispersées dans un mélange, dissous dans un solvant organique, de
(A) 60 à 90% en poids d'un polyester à groupes hydroxyle, linéaire ou ramifié, d'une teneur en groupes hydroxyle de 0,5 à 8% et
(B) 10 à 40% en poids d'une résine phénoxy thermoplastique à groupes hydroxyle, d'un poids moléculaire compris entre 10 000 et 50 000
puis on ajoute une solution d'un di- ou polyisocyanate en une quantité de 0,6 à 1,3 équivalent, rapportée à un équivalent de groupe hydroxyle du polyester.

2. Procédé selon la revendication 1, caractérisé par le fait que le composant (B) est un polycondensat de 2,2-bis-(4-hydroxyphényl)-propane et d'épichlorhydrine, d'une teneur en groupes hydroxyle de 5 à 7% en poids et un poids moléculaire de 20 000 à 30 000.

3. Procédé selon la revendication 1, caractérisé par le fait que le mélange de liant filmogène comporte, outre les composants (A) et (B), encore
(C) 0,5 à 10% en poids, rapporté à la somme de (A) et (B), d'un polymère vinylique, d'un dérivé cellulosique ou d'un composé à groupes hydroxyle de faible poids moléculaire.

**Claims**

1. A process for the production of a magnetic recording medium by preparing a dispersion of fine anisotropic magnetic particles in a solution of a film-forming binder mixture consisting of a polyurethane binder, obtained from a linear or branched hydroxyl-containing polyester and a di- or polyisocyanate, and a phenoxy resin in an organic solvent, with the addition of conventional assistants, applying a layer of the fluid dispersion to a non-magnetic base, orienting the magnetic particles by means of a magnetic field, crosslinking the binder components and drying the resulting layer, wherein the magnetic particles are dispersed in a mixture consisting of
(A) from 60 to 90% by weight of a linear or branched polyester containing from 0.5 to 8% of hydroxyl groups, and
(B) from 10 to 40% by weight of a thermoplastic hydroxyl-containing phenoxy resin having a molecular weight of from 10,000 to 50,000,
which mixture is dissolved in an organic solvent, and a solution of a di- or polyisocyanate is then added in an amount of from 0.6 to 1.3 equivalents, based on one equivalent of hydroxyl groups of the polyester.

2. A process as claimed in claim 1, wherein component (B) is a polycondensate obtained from 2,2-bis-(4-hydroxyphenyl)-propane and epichlorohydrin, containing from 5 to 7% by weight of hydroxyl groups and having a molecular weight of from 20,000 to 30,000.

3. A process as claimed in claim 1, wherein the film-forming binder mixture contains, in addition to components (A) and (B),

(C) from 0.5 to 10% by weight, based on the sum of the amounts of (A) and (B), of a vinyl polymer, a cellulose derivative or a low molecular weight hydroxyl-containing compound.